**Europäisches Patentamt**

**European Patent Office**

**Office européen des brevets**

(19)

(11) Veröffentlichungsnummer: **0 098 378 B1**

(12) **EUROPÄISCHE PATENTSCHRIFT**

(45) Veröffentlichungstag der Patentschrift:
**10.12.86**

(51) Int. Cl.⁴: **F 16 K 11/078**

(21) Anmeldenummer: **83104995.2**

(22) Anmeldetag: **20.05.83**

(54) **Sanitäres Wasserventil.**

(30) Priorität: **03.07.82 DE 3224991**

(43) Veröffentlichungstag der Anmeldung:
**18.01.84 Patentblatt 84/3**

(45) Bekanntmachung des Hinweises auf die Patenterteilung:
**10.12.86 Patentblatt 86/50**

(84) Benannte Vertragsstaaten:
**AT BE CH DE FR GB IT LI NL SE**

(56) Entgegenhaltungen:
**DE - A - 2 243 386**
**DE - A - 2 532 368**
**US - A - 1 943 865**
**US - A - 3 354 910**

(73) Patentinhaber: **IDEAL-STANDARD GMBH, Euskirchener Strasse 80, D-5300 Bonn 1 (DE)**

(72) Erfinder: **Bergmann, Konrad, Dr. Dipl.-Ing., Zur Philippsburg 70, D-5560 Wittlich (DE)**

(74) Vertreter: **Puchberger, Rolf, Dipl. Ing., Patentanwälte, Dipl. Ing. Georg Puchberger Dipl. Ing. Rolf Puchberger Dipl. Ing. Peter Puchberger Singerstrasse 13 Postfach 55, A-1010 Wien (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein sanitäres Wasserventil mit einem feststehenden Zylinder, welcher mindestens eine Wassereinlassöffnung aufweist und zur Aufnahme eines dreh- und/oder verschiebbaren Steuerkolbens dient, wobei mittels des Kolbens die Wassereinlassöffnung ganz oder teilweise absperrbar und mit einer Wasserauslassöffnung in Verbindung bringbar ist.

Ventile dieser Art sind seit langem, insbesondere in der Form von sogenannten Einhebel- oder Eingriff-Mischventilen, bekannt. Bei diesen Armaturen müssen die Einlassöffnungen in dem Zylinder sowohl gegenüber den Zulaufkanälen des Ventilkörpers als auch gegenüber der Wandung des Steuerkolbens abgedichtet sein. Ferner muss der Steuerkolben gegenüber dem Zylinder nach oben bzw. nach aussen sowie nach unten abgedichtet sein. Dies bedeutet, dass bei Konstruktionen der herkömmlichen Art mindestens vier dynamisch belastete Dichtungen vorgesehen sein müssen. Der Grund hiefür ist darin zu sehen, dass eine unmittelbare Abdichtung zwischen dem Zylinder und dem Steuerkolben mittels der bisher in der Praxis verwendeten Materialien für die Herstellung dieser Steuerelemente nicht stattfindet. Bei aus Hartstoffen hergestellten Steuerelementen ist es nicht oder nur mit einem ganz erheblichen Aufwand möglich, die für die geforderte Dichtheit unverzichtbaren sehr kleinen Toleranzen einzuhalten. Bei aus Kunststoffen bestehenden Steuerelementen besteht dieses Problem ebenfalls, und zusätzlich müssten auch hier ganz bestimmte Oberflächengüten erreicht werden, was bei Konstruktionen der in Rede stehenden Art aus Kunststoff sehr schwierig ist.

Aus der US-A 1 943 865 ist ein Mischventil gemäss dem Oberbegriff des Anspruches 1 bekannt, bei dem in einem Zylinder ein Schlitz vorgesehen ist. Jedoch sind an den Stirnseiten des Zylinders komplizierte Weichstoffdichtungen notwendig, welche auch die Enden des Zylinders übergreifen, um diesen und damit den Schlitz gegenüber dem Kolben abzudichten. Es müssen hier gelegentlich Tropfleckagen im geschlossenen Zustand in Kauf genommen werden.

Es wäre sinnvoll, Konstruktionen zu entwickeln, bei denen die Steuerelemente unmittelbar gegeneinander abdichten, weil man dann auf dynamisch belastete Weichstoffdichtungen verzichten könnte, was aus naheliegenden Gründen den konstruktiven Aufwand deutlich verringern und die Betriebssicherheit erheblich erhöhen würde.

Durch die Erfindung werden dynamische Zusatzdichtungen vermieden, und es wird unmittelbar abgedichtet, so dass die Vorteile der z.B. mit keramischen Steuerscheiben ausgerüsteten Mischer auf solche mit einer Kolbensteuerung übertragen werden können.

Bekannt sind bereits Mischventile, bei denen dynamisch belastete Weichstoffdichtungen nicht mehr erforderlich sind, da die Steuerelemente selbst Abdichtfunktionen übernehmen. Bei Konstruktionen dieser Art handelt es sich um Mischventile mit scheibenförmigen Steuerelementen, die aus Metall oder Keramik hergestellt sind. Bei scheibenförmigen Steuerelementen bereitet die Herstellung der geforderten Oberflächengüte keine Schwierigkeiten, und Toleranzprobleme treten abdichtseitig nicht auf, weil die Steuerscheiben auf einfache Art gegeneinander gedrückt werden können.

Ein Nachteil bei Mischventilen mit scheibenförmigen Steuerelementen ist darin zu sehen, dass deren Komfortzonen nur mit einem höheren konstruktiven Aufwand denen bei Kolbenventilen angeglichen werden können. Unter Komfortzone ist in diesem Zusammenhang zu verstehen, dass der Benutzer mit einer grossen Hebel- und Griffbewegung eine nur relativ geringe Temperaturveränderung in dem gängigen Mischwassertemperaturbereich erzielt. Ein weiterer Nachteil bei mit scheibenförmigen Steuerelementen ausgerüsteten sanitären Wasserventilen in der Form von Einhandmischern ist darin zu sehen, dass die beweglichen Steuerscheiben und die notwendigen Strömungsquerschnitte verhältnismässig grosse Scheibenflächen erfordern, was entsprechend grosse Ventildurchmesser zur Folge hat. Ausserdem ist bei den bisher bekannten Mischventilen dieser Art nachteilig, dass der Antrieb für die beweglichen Steuerscheiben einen höherwertigen Gelenk- und Laageraufwand erfordert, da die an die entsprechenden Bauteile angreifenden Kräfte verhältnismässig gross sind.

Der Erfindung liegt die Aufgabe zugrunde, die Dichtungsnachteile bei Ventilen der eingangs genannten Art zu beseitigen und ein sanitäres Wasserventil zu schaffen, das einfach in seinem Aufbau und sicher in der Wirkungsweise ist.

Erreicht ist dieses Ziel in vorteilhafter Weise im wesentlichen dadurch, dass der Zylinder sowie der Kolben aus einem keramischen Werkstoff bestehen und dass der Längsschlitz mindestens im geöffneten Zustand des Ventils von dem Steuerkolben dauernd abgedichtet ist.

Der Längsschlitz gestattet es, die Masse von Steuerkolben und Zylinder so zu wählen, dass der Steuerkolben ein geringes Übermass gegenüber der lichten Weite des Zylinders aufweist und dennoch mit geringem Kraftaufwand in den Zylinder eingeführt werden kann, indem sich dieser elastisch aufweist. Bei so hergestelltem Steuerkolben und Zylinder kann mit wesentlich grösseren einzelnen Toleranzfeldern gearbeitet werden, die technisch problemlos beherrschbar sind, und wobei nach dem Zusammenfügen des Steuerkolbens mit dem Zylinder die zwischen den Funktionsflächen verbleibenden Spalten um mehrere Grössenordnungen kleiner sind als die zur Herstellung dieser einzelnen Bauteile verwendeten Toleranzfelder. Hinzu kommt, dass durch die ohnehin vorhandene Vorspannung der die Einlassöffnungen sowie die Auslassöffnung des Zylinders gegenüber den entsprechenden Ventilkörperöffnungen abdichtenden O-Ringe der Zylinder zusätzlich an den Kolben angedrückt wird. Gemäss einem ausgestaltenden Merkmal der Erfindung nimmt die Wandstärke des Zylinders vom Längsschlitz ausgehend zu. Erreicht wird dies technisch dadurch, dass man die Zylinderbohrung und den Zylinderaussendurchmesser exzentrisch zueinander anordnet. Bei Verwendung eines so gestalteten Zylinders können die einzelnen Toleranzfelder besonders gross sein.

Gemäss einem weiteren ausgestaltenden Merkmal der Erfindung ist das sanitäre Wasserventil als Mischventil ausgebildet, wobei die Einlassöffnungen für das kalte und warme Wasser sowie die Auslassöffnung für das Mischwasser auf der gleichen Höhe vorgesehen sind. Eine solche Anordnung der Öffnungen hat gegenüber den bekannten Kolbenmischventilen, bei denen die Auslassöffnung an einer gegenüber den Einlassöffnungen höher oder tiefer gelegenen Stelle des Zylinders vorgesehen ist, den Vorteil, dass die Bauhöhe von Steuerkolben und Zylinder vergleichsweise klein ist.

Nach einem anderen ausgestaltenden Merkmal der Erfindung verläuft der durchgehende Längsschlitz zwischen den Einlassöffnungen, und die Auslassöffnung ist auf der dem Längsschlitz gegenüberliegenden Seite des Zylinders vorgesehen. Diese Ausführung gestattet es, verhältnismässig einfach ausgebildete Steuerkolben zu verwenden. Hiefür wird gemäss weiteren erfindungsgemässen Ausgestaltungen vorgeschlagen, den Steuerkolben entweder massiv auszubilden mit einem die Einlassöffnungen mit der Auslassöffnung verbindenden Strömungsraum in der Form einer Ausnehmung oder den Steuerkolben aus einem Rohrkörper herzustellen, wobei der die Einlassöffnungen mit der Auslassöffnung verbindende Strömungsraum als einzelner Durchbruch der Wandung des Steuerkolbens ausgebildet ist.

Nach einer anderen Ausgestaltung der Erfindung ist die Umfangserstreckung jeder Einlassöffnung grösser als die der Auslassöffnung. Auf diese Weise erhält man die gewünschten grossen Komfortzonen und löst das Problem der Wasserdurchflussmenge auslasseitig einfach dadurch, dass man die Öffnung in der Höhe grösser ausbildet.

Ferner wird gemäss einer weiteren erfindungsgemässen Ausgestaltung, bei der die Abdichtung der Einlassöffnungen und der Auslassöffnung gegenüber den entsprechenden Zulaufkanälen und dem Abgangskanal des Ventilkörpers mittels statisch belasteter O-Ring-Dichtungen erfolgt, vorgeschlagen, für die Abstützung der O-Ring-Dichtungen in Umfangrichtung des Zylinders diesen aussen mit jeweils einer durchgehenden Längsrippe zwischen der Auslassöffnung und den beiden Einlassöffnungen zu versehen sowie mit jeweils einer durchgehenden Längsrippe auf beiden Seiten des Längsschlitzes, während für die Abstützung der O-Ring-Dichtungen nach oben und unten zwischen den Längsrippen schalenförmige Gegenlager angeordnet sind. Bei einer solchen Abstützung der O-Ring-Dichtungen werden die Festigkeitseigenschaften des Zylindermaterials in Umfangsrichtung ausgenutzt, wodurch der Zylinder in Hinblick auf die Abstützung der O-Ring-Dichtungen hinterschnittfrei hergestellt werden kann. Diesen Vorteil bietet gemäss einem weiteren ausgestaltenden Merkmal der Erfindung auch eine Konstruktion, bei welcher der Zylinder für die Abstützung der O-Ring-Dichtungen in einer Hülse gelagert ist, welche entsprechende Durchbrüche für die Aufnahme der O-Ring-Dichtungen aufweist. Diese Hülse ist nach einem weiteren Merkmal der Erfindung mit einem durchgehenden Längsschlitz versehen und aus einem metallischen Bandmaterial gestanzt und gerollt, was sich als besonders kostengünstig erwiesen hat.

In der Zeichnung ist der Erfindungsgegenstand in einem Ausführungsbeispiel als Mischventil dargestellt; und zwar zeigen:

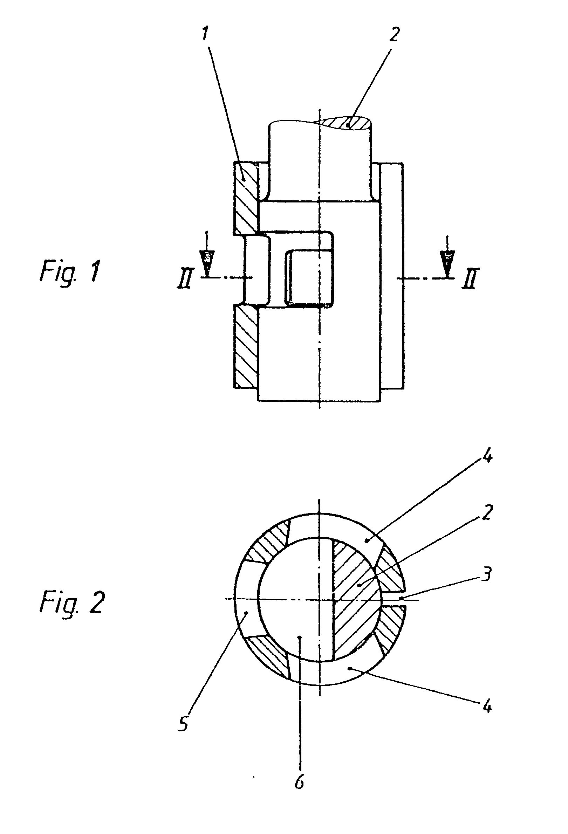

Fig. 1 einen Zylinder im Längsschnitt mit Steuerkolben,
Fig. 2 einen Schnitt gemäss der Linie II-II der Fig. 1,

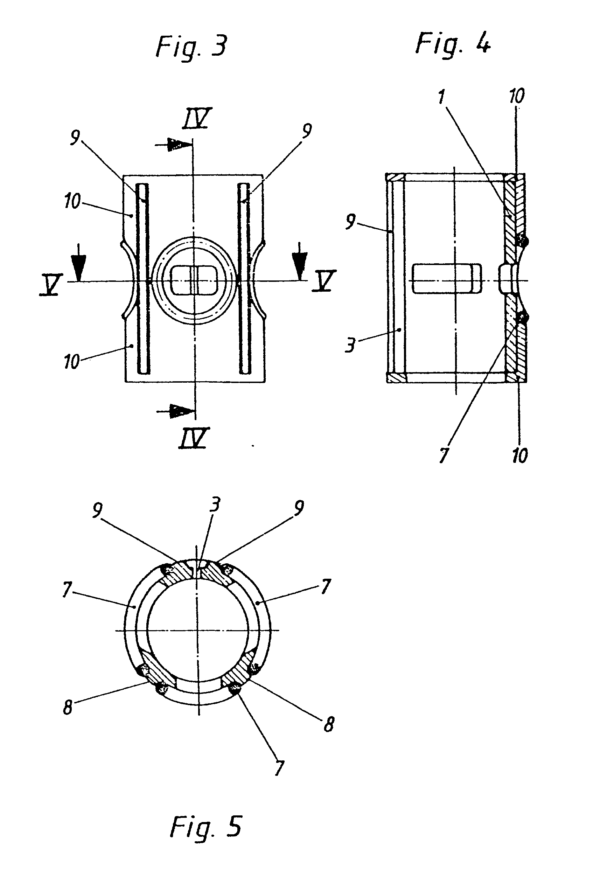

Fig. 3 den Zylinder mit O-Ring-Dichtungen,
Fig. 4 einen Längsschnitt gemäss der Linie IV-IV der Fig. 3 und
Fig. 5 einen Schnitt gemäss der Linie V-V der Fig. 3

Darin ist mit 1 der Zylinder des Mischventils bezeichnet, in dem ein massiver Steuerkolben 2 dreh- und verschiebbar geführt ist. Der Zylinder 1 ist mit einem durchgehenden Längsschlitz 3 versehen und weist zwei Einlassöffnungen 4 für kaltes und warmes Wasser auf sowie eine Auslassöffnung 5 für das Mischwasser. Der Längsschlitz 3 befindet sich auf der der Auslassöffnung 5 gegenüberliegenden Seite des Zylinders 1 zwischen den beiden Einlassöffnungen 4, die mit der Auslassöffnung 5 auf gleicher Höhe vorgesehen sind und deren Umfangserstreckung jeweils grösser ist als die der Auslassöffnung 5, welche in der Höhe grösser ist als die Einlassöffnung 4. Für die Verbindung der Einlassöffnung 4 mit der Auslassöffnung 5 weist der massive Steuerkolben 2 einen Strömungsraum 6 in der Form einer Ausnehmung auf. Wie ersichtlich erfolgt die Abdichtung der Einlassöffnungen 4 und der Auslassöffnung 5 gegenüber entsprechenden Zulaufkanälen und einem Abgangskanal eines nicht dargestellten Ventilkörpers mittels O-Ringen 7. Für die Abstützung der O-Ringe in Umfangsrichtung des Zylinders ist dieser aussen mit jeweils einer durchgehenden Längsrippe 8 zwischen der Auslassöffnung 5 und den beiden Einlassöffnungen 4 versehen sowie mit jeweils einer durchgehenden Längsrippe 9 auf beiden Seiten des Längsschlitzes 3. Für die Abstützung der O-Ringe 7 nach oben und unten sind zwischen den Längsrippen 8, 9 schalenförmige Gegenlager 10 angeordnet.

Die Funktionsweise eines erfindungsgemässen Mischventils entspricht derjenigen bekannter Kolbenventile. Durch Drehen des Steuerkolbens 2, welcher ebenso wie der Zylinder 1 vorzugsweise aus Aluminiumoxid besteht, erfolgt die Temperatursteuerung, während durch Verschieben des Steuerkolbens 2 das Mischventil absperrbar und die gewünschte Wassermenge einstellbar ist.

Die beschriebene und dargestellte Ausführung stellt nur ein Beispiel zur Verwirklichung der Erfindung dar, und diese ist nicht darauf beschränkt, vielmehr sind im Rahmen des erfindungsgemässen Grundgedankens auch noch andere Ausführungsmöglichkeiten gegeben. So kann die Erfindung z.B. auch bei Zweigriff-Mischventilen und bei einzelnen Absperrventilen für nur kaltes und warmes Wasser zur Anwendung gelangen.

Weitere Ausgestaltungsmöglichkeiten sind in den Ansprüchen gekennzeichnet, wobei bezüglich der Anordnung der beiden Einlassöffnungen sowie der Auslassöffnung auf gleicher Höhe erfindungsgemäss noch zu verstehen ist, dass die Oberkante der Auslassöffnung nicht unterhalb der Unterkante der Einlassöffnungen bzw. die Unterkante der Auslassöffnung nicht oberhalb der Oberkante der Einlassöffnungen liegt.

**Patentansprüche**

1. Sanitäres Wasserventil mit einem feststehenden Zylinder (1), welcher einen durchgehenden Schlitz (3) sowie mindestens eine Wassereinlassöffnung (4) aufweist und zur Aufnahme eines dreh- und/oder verschiebbaren Steuerkolbens (2) dient, wobei die aufeinanderliegenden Flächen des Zylinders (1) und des Kolbens (2) als Dichtflächen ausgebildet sind und wobei mittels des Kolbens (2) die Wassereinlassöffnung (4) ganz oder teilweise absperrbar und mit einer Wasserauslassöffnung (5) in Verbindung bringbar ist, dadurch gekennzeichnet, dass der Zylinder (1) sowie der Kolben (2) aus einem keramischen Werkstoff bestehen und dass der Längsschlitz (3) mindestens im geöffneten Zustand des Ventils von dem Steuerkolben (2) dauernd abgedichtet ist.

2. Sanitäres Wasserventil nach Anspruch 1, dadurch gekennzeichnet, dass die Wandstärke des Zylinders (1) vom Längsschlitz (3) ausgehend zunimmt.

3. Sanitäres Wasserventil insbesondere nach Anspruch 1, oder 1 und 2, welches als Mischventil ausgebildet ist und bei dem der Zylinder zwei Einlassöffnungen für das kalte und warme Wasser sowie eine Auslassöffnung für das Mischwasser aufweist, dadurch gekennzeichnet, dass die beiden Einlassöffnungen (4) sowie die Auslassöffnung (5) auf der gleichen Höhe vorgesehen sind.

4. Sanitäres Wasserventil nach Anspruch 1 oder 1, 2 und 3, dadurch gekennzeichnet, dass der durchgehende Längsschlitz (3) zwischen den Einlassöffnungen (4) verläuft und die Auslassöffnung (5) auf der dem Längsschlitz (3) gegenüberliegenden Seite des Zylinders (1) vorgesehen ist.

5. Sanitäres Wasserventil nach einem oder mehreren der vorstehenden Ansprüche, dadurch gekennzeichnet, dass die Umfangserstreckung der Einlassöffnungen (4) jeweils grösser ist als die der Auslassöffnung (5).

6. Sanitäres Wasserventil nach einem oder mehreren der vorstehenden Ansprüche, dadurch gekennzeichnet, dass der Steuerkolben (2) massiv ausgeführt und der die Einlassöffnungen (4) mit der Auslassöffnung (5) verbindende Strömungsraum als Ausnehmung ausgebildet ist.

7. Sanitäres Wasserventil nach einem oder mehreren der vorstehenden Ansprüche, dadurch gekennzeichnet, dass der Steuerkolben aus einem Rohrkörper gebildet und der die Einlassöffnungen (4) mit der Auslassöffnungen (5) verbindende Strömungsraum als einzelner Durchbruch der Wandung des Steuerkolbens ausgebildet ist.

8. Sanitäres Wasserventil nach einem oder mehreren der vorstehenden Ansprüche, wobei die Abdichtung der Einlassöffnungen und der Auslassöffnung gegenüber den entsprechenden Zulaufkanälen und dem Abgangskanal des Ventilkörpers mittels O-Ring-Dichtungen erfolgt, dadurch gekennzeichnet, dass für die Abstützung der O-Ring-Dichtungen (7) in Umfangsrichtung des Zylinders (1) dieser aussen mit jeweils einer durchgehenden Längsrippe (8) zwischen der Auslassöffnung (5) und den beiden Einlassöffnungen (4) versehen ist sowie mit jeweils einer durchgehenden Längsrippe (9) auf beiden Seiten des Längsschlitzes (3) und dass für die Abstützung der O-Ring-Dichtungen (7) nach oben und unten zwischen den Längsrippen (8, 9) schalenförmige Gegenlager (10) angeordnet sind.

9. Sanitäres Wasserventil nach einem der Ansprüche 1 bis 7, dadurch gekennzeichnet, dass für die Abstützung der O-Ring-Dichtungen der Zylinder in einer Hülse gelagert ist, welche entsprechende Durchbrüche für die Aufnahme der O-Ring-Dichtungen aufweist.

10. Sanitäres Wasserventil nach Anspruch 9, dadurch gekennzeichnet, dass die Hülse einen durchgehenden Längsschlitz aufweist und aus einem metallischen Bandmaterial gestanzt und gerollt ist.

**Claims**

1. Sanitary water valve having a fixed cylinder (1) which has a continuous slot (3) and at least one water inlet aperture (4) and is used to receive a rotatable and/or displaceable control piston (2), whereby the superimposed surfaces of the cylinder (1) and of the piston (2) are formed as sealing surfaces and whereby by means of the piston (2) the water inlet aperture (4) can be completely or partially cut off and can be brought into connection with a water outlet aperture (5), characterised in that the cylinder (1) and the piston (2) are of a ceramic material and in that the longitudinal slot (3) is permanently sealed, at least in the open state of the valve, by the control piston (2).

2. Sanitary water valve according to claim 1, characterised in that the wall thickness of the cylinder (1) increases from the longitudinal slot (3).

3. Sanitary water valve in particular according to claim 1, or 1 and 2, which is constructed as a mixer valve, and in which the cylinder has two inlet apertures for the cold and hot water, and an outlet aperture for the mixed water, characterised in that the two inlet apertures (4) and the outlet aperture (5) are provided on the same level.

4. Sanitary water valve according to claim 1 or 1, 2 and 3, characterised in that the continuous longitudinal slot (3) runs between the inlet apertures (4), and the outlet aperture (5) is provided on the side of the cylinder (1) opposite the longitudinal slot (3).

5. Sanitary water valve according to one or several of the preceding claims, characterised in that the circumferential extent of the inlet apertures (4) is respectively greater than that of the outlet aperture (5).

6. Sanitary water valve according to one or several of the preceding claims, characterised in that the control piston (2) is of solid construction, and the flow area connecting the inlet apertures (4) to the outlet aperture (5) is constructed as a recess.

7. Sanitary water valve according to one or several of the preceding claims, characterised in that the control piston is formed from a tubular body, and the flow area connecting the inlet apertures (4) to the outlet aperture (5) is formed as a single opening in the wall of the control piston.

8. Sanitary water valve according to one or several of the preceding claims, wherein the sealing of the inlet apertures and the outlet aperture with respect to the corresponding inlet ducts and the outflow duct of the valve body is effected by O-ring seals, characterised in that for supporting the O-ring seals (7) in the circumferential direction of the cylinder (1) this is provided on the outside with respectively one continuous longitudinal rib (8) between the outlet aperture (5) and the two inlet apertures (4) and with respectively one continuous longitudinal rib (9) on both sides of the longitudinal slot (3), and in that for supporting the O-ring seals (7), dish-shaped abutments (10) are arranged at the top and the bottom between the longitudinal ribs (8, 9).

9. Sanitary water valve according to one of claims 1 to 7, characterised in that for supporting the O-ring seals, the cylinder is mounted in a sleeve which has corresponding openings for receiving the O-ring seals.

10. Sanitary water valve according to claim 9, characterised in that the sleeve has a continuous longitudinal slot and is stamped and rolled out of a metal strip material.

**Revendications**

1. Robinet d'eau pour appareils sanitaires, comportant un cylindre interne fixe (1), qui présente un fente longitudinale (3) allant d'un bout à l'autre de ce cylindre ainsi qu'au moins un orifice d'entrée d'eau (4), et qui est adapté à recevoir un piston d'obturation (2) pouvant tourner et/ou coulisser dans ce cylindre (1); les faces en appui l'une sur l'autre du cylindre (1) et du piston (2) constituant des faces d'étanchéité, et le piston d'obturation (2) permettant d'obturer complètement ou en partie l'orifice d'entrée d'eau (4), et de faire communiquer cet orifice d'entrée avec un orifice de sortie d'eau (5); caractérisé en ce que le cylindre (1) ainsi que le piston d'obturation (2) sont constitués d'une matière céramique, et en ce que la fente longitudinale (3) du cylindre est obturée en permanence de manière étanche par le piston d'obturation (2), au moins en position d'ouverture du robinet.

2. Robinet selon la revendication 1, caractérisé en ce que l'épaisseur de la paroi du cylindre (1) va en augmentant à partir de la fente longitudinale (3).

3. Robinet mitigeur, notamment selon la revendication 1 ou les revendications 1 et 2, dont le cylindre présente deux orifices d'entrée pour l'eau froide et l'eau chaude, ainsi qu'un orifice de sortie pour l'eau mitigée; caractérisé en ce que les deux orifices d'entrée (4) ainsi que l'orifice de sortie (5) sont disposés à la même hauteur.

4. Robinet selon la revendication 1 ou les revendications 1, 2 et 3, caractérisé en ce que la fente longitudinale (3) qui va de bout en bout du cylindre (1) passe entre les orifices d'entrée (4), et en ce que l'orifice de sortie (5) est disposé sur le cylindre (1) du côté opposé à la fente longitudinale (3).

5. Robinet selon une ou plusieurs des revendications précédentes, caractérisé en ce que chacun des orifices d'entrée (4) couvre dans le sens du pourtour du cylindre (1) une étendue supérieure à celle de l'orifice de sortie (5).

6. Robinet selon une ou plusieurs des revendications précédentes, caractérisé en ce que le piston d'obturation (2) comporte un corps massif, la chambre d'écoulement, destinée à mettre en communication les orifices d'entrée (4) avec l'orifice de sortie (5), étant constituée par un évidement du corps du piston d'obturation (2).

7. Robinet selon une ou plusieurs des revendications précédentes, caractérisé en ce que le piston d'obturation comporte un corps tubulaire, la chambre d'écoulement servant à faire communiquer les orifices d'entrée (4) avec l'orifice de sortie (5) étant constituée par une simple échancrure de la paroi du corps du piston d'obturation.

8. Robinet selon une ou plusieurs des revendications précédentes, dans lequel l'étanchéité des orifices d'entrée et de l'orifice de sortie, par rapport au canal de départ et aux canaux d'arrivée correspondants du corps du robinet, est assurée par des garnitures analogues à des joints toriques; caractérisé en ce que le cylindre (1) comporte extérieurement deux nervures longitudinales d'appui (8), disposées chacune entre l'orifice de sortie (5) et l'un des deux orifices d'entrée (4), pour maintenir les garnitures d'étanchéité (7) dans le sens du pourtour du cylindre (1); ainsi que deux autres nervures longitudinales (9), disposées de part et d'autre de la fente longitudinale (3); et des parties en forme de cuvettes (10) disposées entre les nervures longitudinales (8,9), pour soutenir vers le haut et vers le bas les garnitures d'étanchéité (7) analogues à des joints toriques.

9. Robinet selon l'une des revendications 1 à 7, caractérisé en ce que le cylindre (1) est monté dans une chemise pour soutenir les garnitures d'étanchéité analogues à des joints toriques, cette chemise comportant des échancrures appropriées pour recevoir ces garnitures d'étanchéité.

10. Robinet selon la revendication 9, caractérisé en ce que la chemise comporte une fente longitudinale qui va de bout en bout de cette chemise, celle-ci étant fabriquée par découpage à la presse et enroulement d'une bande de métal.

Fig. 1

Fig. 2

Fig. 3

Fig. 4

Fig. 5